(19)

**Europäisches Patentamt**
**European Patent Office**
**Office européen des brevets**

(11) **EP 2 916 288 A1**

(12) **EUROPEAN PATENT APPLICATION**

(43) Date of publication:
**09.09.2015 Bulletin 2015/37**

(51) Int Cl.:
**G06T 5/00** *(2006.01)* **G06T 7/00** *(2006.01)*
**H04N 1/64** *(2006.01)*

(21) Application number: **15150966.8**

(22) Date of filing: **13.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.03.2014 EP 14305322**

(71) Applicant: **Thomson Licensing**
**92130 Issy-les-Moulineaux (FR)**

(72) Inventors:
• **Sorgi, Lorenzo**
**30655 Hannover (DE)**
• **Bushnevskiy, Andrey**
**30449 Hannover (DE)**

(74) Representative: **Schmidt-Uhlig, Thomas**
**Deutsche Thomson OHG**
**European Patent Operations**
**Karl-Wiechert-Allee 74**
**30625 Hannover (DE)**

(54) **Camera calibration method and apparatus using a color-coded structure**

(57) A method and an apparatus (30) for camera calibration using a color-coded structure are described. The camera calibration method comprises: receiving (10) from a camera an image, in which a color-coded structure is captured; determining (11) a plurality of coordinate points in the image; and performing (12) camera calibration using the coordinate points. The color-coded structure includes at least two sets of patterns in different color channels.

Fig. 2

EP 2 916 288 A1

**Description**

**TECHNICAL FIELD**

A method and an apparatus for camera calibration are proposed, particularly using a color-coded structure. The technical field denoted as camera calibration collects algorithms and technologies aimed at the characterization of a mathematical model for the description of the image formation process of a camera. In addition, a computer readable medium suitable for such a method and an apparatus is also proposed.

**BACKGROUND**

One essential requirement for camera model estimation, namely camera calibration, is an input dataset of error-free correspondences between 3D coordinates of some points in the real world and their projection on one or within a set of calibration images. The input dataset can be generally acquired by capturing a calibration object on images and extracting the correspondences therefrom [I]. A great majority of the camera calibration algorithms proposed in literature and available on the market is denoted as metric calibration, where the notation metric highlights the explicit exploitation of a-priori known metric information of a 3D world scene. For such practice, a grid-like pattern is normally utilized because it is easily detectable, can be captured in form of single channel grayscale image, and can provide the required metric information needed for the metric camera calibration, i.e. a set of grid points and the coordinates thereof.

In parallel to the above leading trend, some researches have addressed a different approach for camera calibration which uses only non-metric features inferred from the calibration object. One exemplary practice for such approach is the enforcement of the collinearity constraint on image points projected from a same 3D line [II, III]. These techniques provide several advantages. The unfavorite possibility of incorrect assignment of 3D world point coordinates is eliminated, namely a higher robustness as the correct recovery of 3D coordinates of the calibration grid is not required. The complexity for the corresponding estimation problem is reduced to a minimal level, and thus it becomes more effective to calibrate a camera, especially for those with wide angle lenses which easily result in distorted models.

The non-metric calibration approaches have so far not found a great success in the field due to the difficulty to develop a mathematical formulation of the underlying estimation problem. In addition, there is a lack of a complete understanding of the related camera model indeterminacy. According to [IV], a complete Euclidean calibration using non-metric input data needs not only the enforcement of collinearity constraint of 3D coordinate points but also the parallelism and the orthogonality among the 3D line bundles.

A standard checkerboard, which is widely used as the source of a grid-like pattern, indeed satisfies the need for a metric calibration technique but however is not an optimal solution for the non-metric calibration approach. When it comes to a low level processing aimed at line estimation to detect a bundle of lines, the lines intersection of the checkerboard can result in a non-negligible disturbance for the data collection.

**SUMMARY**

Therefore, it is an objective to propose an improved solution for camera calibration, which can eliminate the unfavorite disturbance from the line intersections of a grid-like structure, but at the same time maintain other requirements such as point collinearity, line parallelism and orthogonality. Specifically, this invention provides a solution for the integration of a bi-component calibration patterns within a single image using a color-coded structure.

According to one embodiment, a camera calibration method comprises:

- receiving from a camera an image, in which a color-coded structure is captured, wherein the color-coded structure includes at least two sets of patterns in different color channels;
- determining a plurality of coordinate points associated with the color-coded structure in the image; and
- performing camera calibration using the coordinate points.

Accordingly, a camera calibration apparatus comprises:

- an image reception unit configured to receive from a camera an image, in which a color-coded structure is captured, wherein the color-coded structure includes at least two sets of patterns in different color channels; and
- a camera calibration unit configured to determine a plurality of coordinate points associated with the color-coded structure in the image and to perform camera calibration using the coordinate points.

Also, a computer readable storage medium having stored therein instructions for camera calibration, which when executed by a computer, cause the computer to:

- receive from a camera an image, in which a color-coded structure is captured, wherein the color-coded structure includes at least two sets of patterns in different color channels;
- determine a plurality of coordinate points associated with the color-coded structure in the image; and
- perform camera calibration using the coordinate points.

## BRIEF DESCRIPTION OF THE DRAWINGS

For a better understanding the proposed solutions shall now be explained in more detail in the following description with reference to the figures. It is understood that the solutions are not limited to the disclosed exemplary embodiments and that specified features can also expediently be combined and/or modified without departing from the scope of the proposed solutions as defined in the appended claims.

Fig. 1     is a flow chart illustrating one preferred embodiment of a camera calibration method.

Fig. 2     is a flow chart illustrating another preferred embodiment of a camera calibration method.

Fig. 3     shows an exemplary color-coded structure used in one preferred embodiment of the camera calibration method.

Fig. 4     is a flow chart illustrating one exemplary embodiment of the camera calibration method.

Fig. 5     shows results obtained from the exemplary embodiment of the camera calibration method shown in Fig. 4.

Fig. 6     shows more results obtained from the exemplary embodiment of the camera calibration method shown in Fig. 4.

Fig. 7     is a flow chart illustrating one preferred embodiment of a camera calibration method which includes a refinement process.

Fig. 8     shows the detection results of calibration datasets as a vertical edge on color and grayscale images.

Fig. 9     shows two exemplary edge templates used in the refinement process in the preferred embodiments of the camera calibration method.

Fig. 10    is a flow chart illustrating an exemplary refinement process in one preferred embodiment of the camera calibration method.

Fig. 11    shows the geometric transformation and the photometric normalization techniques utilized in the refinement process in the preferred embodiments of the camera calibration method.

Fig. 12    shows results obtained from the exemplary embodiments of the proposed camera calibration method, with and without a refinement process.

Fig. 13    shows the improvement of calibration process using the preferred embodiments of the proposed camera calibration method.

Fig. 14    is a schematic diagram illustrating a preferred embodiment of an apparatus configured to perform the embodiments of the camera calibration method.

## DETAILED DESCRIPTION OF PREFERRED EMBODIMENTS

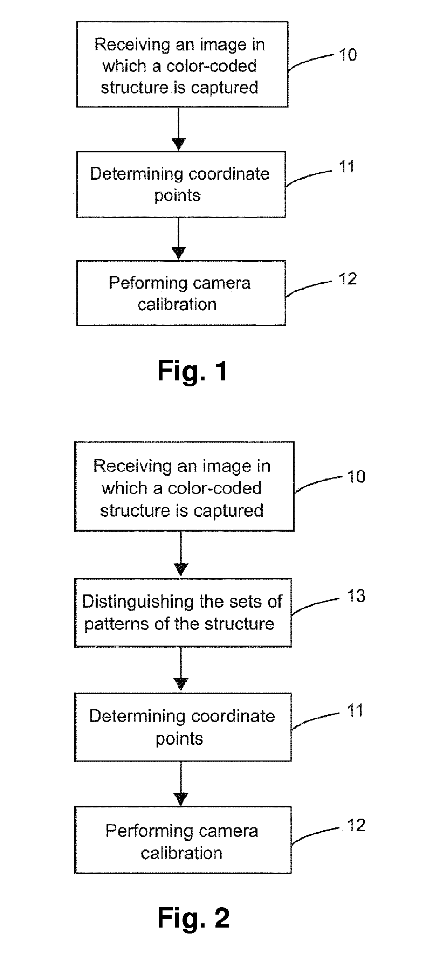

Fig. 1 schematically illustrates a preferred embodiment of a camera calibration method, which comprises: receiving 10 from a camera an image, in which a color-coded structure is captured, wherein the color-coded structure includes at least two sets of patterns with different color channels; determining 11 a plurality of coordinate points associated with the color-coded structure in the image; and performing 12 camera calibration using the coordinate points. The color-coded structure can be any kind of structure which includes at least two sets of patterns with different color channels. For example, the color-coded structure can be a color-coded graph which is displayed on a 2D surface captured by the camera. Similarly, the set of patterns can be any kind of patterns, for example, parallel lines or parallel stripes.

Preferably, as shown in Fig. 2, the method further comprises distinguishing 13 the at least two sets of patterns of the color-coded structure, and thus determining 11 respectively a subset of coordinate points for each set of patterns. In this case, each subset of coordinate points is associated with the corresponding set of patterns of the color-coded structure.

In addition, one preferred embodiment of the camera calibration method can optionally comprise: receiving 10 from the camera a plurality of images, in each of which the color-coded structure is captured; and determining 11 a plurality of coordinate points for each of the images. The result of camera calibration can be improved and is more precise when more than one image is captured and used.

The determination and collection of the coordinate points, which is generally denoted as a calibration dataset, is aimed at the identification of the calibration object (i.e. the color-coded structure in this method) within each image. This implies the detection of a set of image features and the establishment of correspondences between these and the source features on the calibration object.

In the following one exemplary preferred embodiment of the method of this invention will be described and explained in detail. It should be noted that, when repeated description and detailed descriptions of well-known functions or configurations may make unnecessarily obscure the gist of the present invention, the detailed description will be omitted.

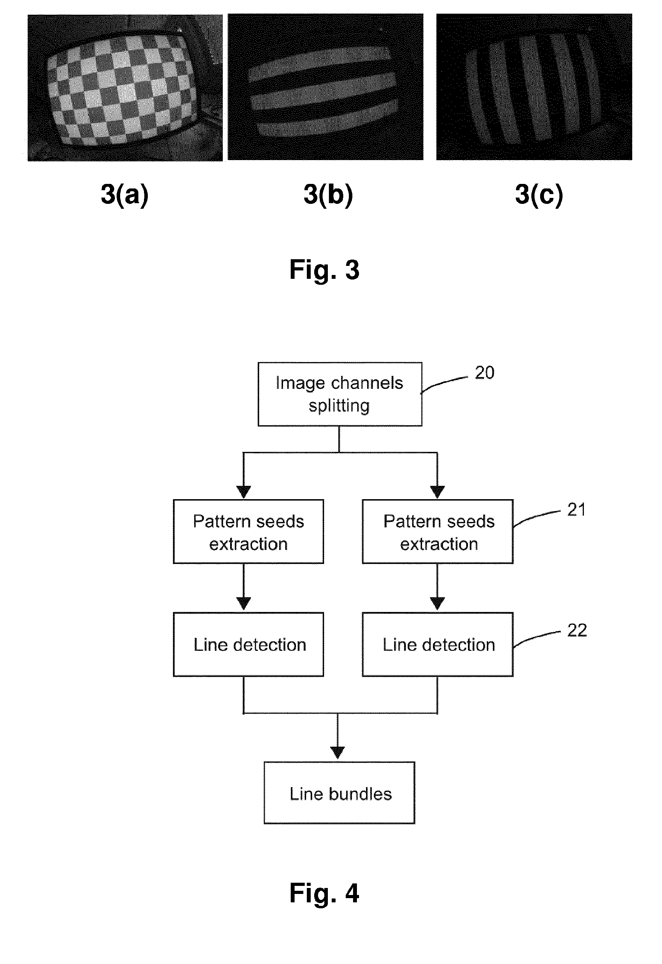

Fig. 3(a) shows an exemplary color-coded structure used in the preferred embodiment, which is a color-coded graph including two sets of patterns. Each of the two sets of patterns is respectively a bundle of parallel stripes, and the color channels of the two bundles are different. Preferably, the two bundles of parallel stripes are mutually orthogonal. For example, as shown in Figs. 3(b) and 3(c), the horizontal bundle of parallel strips is in red and the vertical bundle is in blue. The colors used here to build the basic pattern block, e.g., red, blue and green, are chosen in order to ease the auto white balance of the camera. The proposed color-coded structure produces an average color of a gray tone. This is an advantage as it meets the gray-world assumption of most of the automatic white balance algorithms, which thus allows for a successful collection of good calibration views for both outdoor and indoor situations. For the color-coded graph used in this preferred embodiment, the number of bundles of lines, the color channel of each bundle, and the relative angle between any two bundles are of course flexible and can be adjusted depending on different demands and situations.

The color-coded graph can be simply shown on a screen and captured by a camera to be calibrated from different positions and under different orientations. These captured images provide the initial calibration image dataset. By acquiring the image dataset, a plurality of coordinate points in the images, i.e. a calibration dataset, can be extracted for a subsequent camera calibration process.

In this preferred embodiment, a light user-assisted ad-hoc algorithm is designed for the extraction of the calibration dataset. An image exploration tool based on image exploration with the Gauss-Laguerre Circular Harmonic Filters (GL-CHF) of order and degree (1,0) is used, which has been tested as a robust detector even in presence of high level of image noise [V]. It is a complex valued steerable filter derived from the corresponding GL function and is specifically tailored for the detection of step-like image features. Filters belonging to this family exhibit scale-rotation invariance properties and discrimination capability for different image features [VI, VII, VIII, XI]. This algorithm eases the collection of an input dataset for the non-metric camera calibration, of which the representative steps are illustrated in Fig. 4.

The two sets of patterns with different color channels are firstly split 20, followed by performing the pattern detection (21, 22) respectively on the red and blue channel of each image.

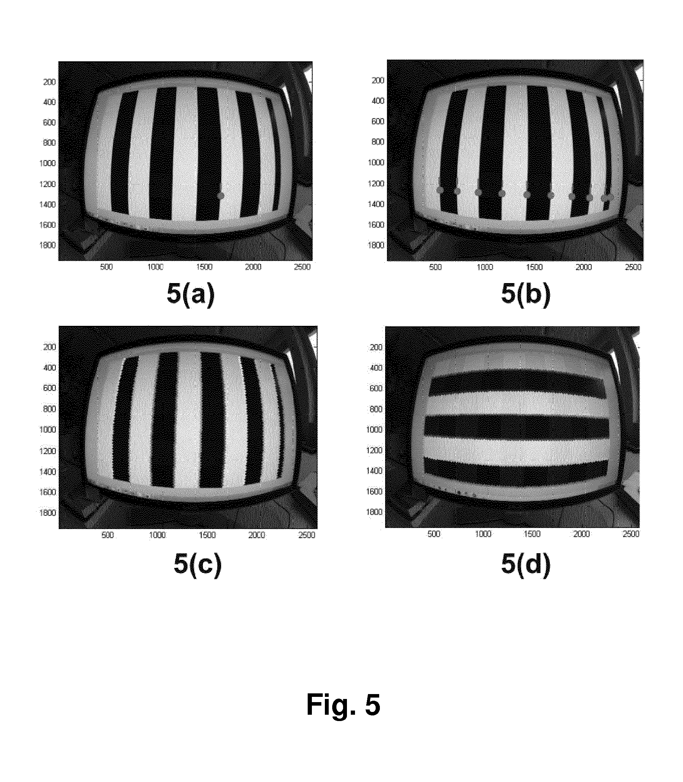

Referring to Fig. 5(a), an initial extraction 21 of a seed point for each line of the patterns of parallel stripes is performed. The pixel location providing the highest magnitude response against the image exploration filter is determined as the initial seed point, which is assumed to be a pixel point located on a target line. A corresponding line direction is extracted from the phase of the pixel response. A set of collinear seeds of a bundle of parallel lines are then searched on the graph, as shown in Fig. 5(b). An image slice going through the detected seed point and being orthogonal to the detected line direction is inspected. All the local maxima of the magnitude of the filter response are selected as potential seed points of the lines comprised in the specific pattern. Similar to the initial seed point, the line direction of each selected seed point is extracted from the phase of the pixel response.

Referring to Fig. 4, the extraction 22 of the corresponding line set is then performed by expansion of the selected seed points. Each seed point is expanded by means of an edge-walking technique, which can be any known techniques in the field. Finally, in order to increase the edge localization accuracy, the detected lines are refined to sub-pixel accuracy using the area-based edge tracking algorithm proposed in [IX]. The selected edge points of each of the detected lines are extracted as the calibration dataset.

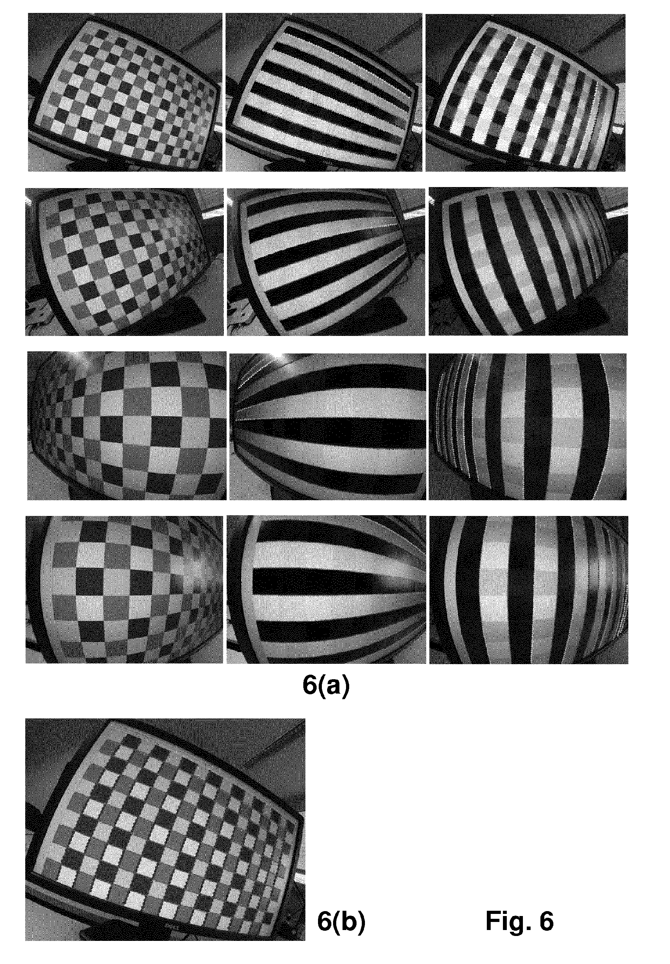

As above described and shown in Fig. 4, the procedure of extraction of a calibration dataset is applied independently and respectively to the two sets of patterns of parallel stripes. Two calibration datasets of orthogonal bundles of lines are eventually extracted as shown in Figs. 5(c) and 5(d). Fig. 6 provides more exemplary results of the extraction of calibration datasets obtained from a plurality of calibration images. In Fig. 6(a), for each of the calibration images shown on the left column, two calibration datasets of orthogonal bundles of lines are extracted, where the horizontal bundle of lines is shown in the middle and the vertical bundle is shown on the right column. Fig. 6(b) correspondingly shows the detected grid lines on the red-green-blue pattern.

In this exemplary embodiment, the level of correspondence established between the object and the image points is non-metric. In other words, the image points belonging to the same line should be grouped together, and the image lines belonging to the same pattern should be grouped together as well. The metric location of the points belonged to the same line and of the lines belonged to the same bundle are irrelevant.

According to the proposed camera calibration method, a new color-coded structure is specifically designed, which includes at least two distinct sets of patterns of different color channels, e.g., the two bundles of parallel stripes. The sets of patterns can be embedded in a single calibration image to satisfy simultaneously the constraints required for camera calibration together with a high degree of detectability.

In the exemplary case of two bundles of parallel stripes, the structure can provide the geometrical constraints required by the line-based non-metric calibration technique, as the visual content is significantly enhanced by removing the line segment intersections. Taking advantage of the specific structure of the new pattern, a dedicated detector is defined, which is able to retrieve the line bundle from highly distorted views by means of a local gradient-driven image exploration. The proposed camera calibration method therefore allows the edge detector to extract with high accuracy uncrossed lines from the input image dataset, which implicitly carry point collinearity, line parallelism and line bundles orthogonality clues.

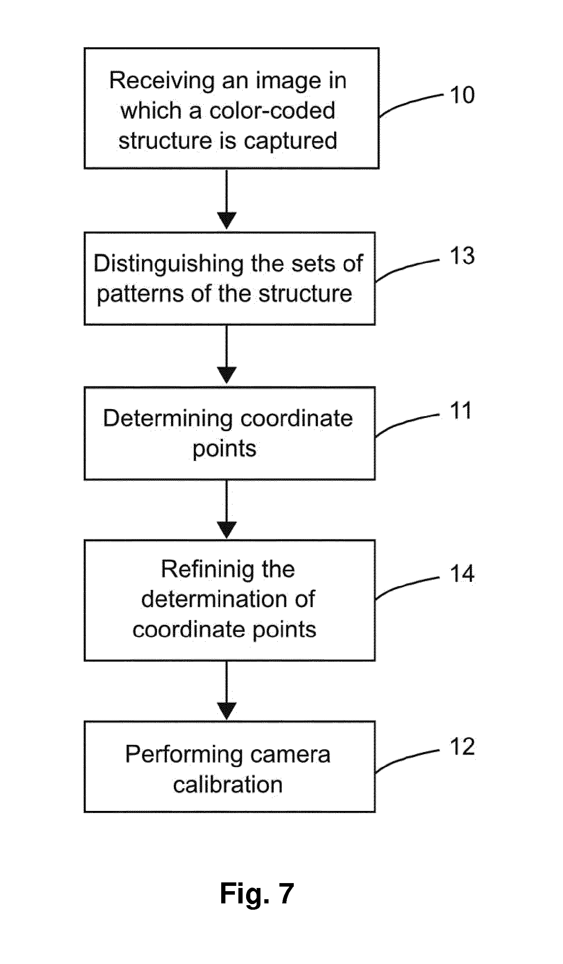

Referring to Fig. 7, another preferred embodiment of the camera calibration method optionally comprises refining (14) the determination of the plurality of coordinate points associated with the color-coded structure. Since the color features of the color-coded structure might result in some possible localization offset of the determined coordinate points, it is preferred to refine and improve the final determined calibration datasets to achieve a higher accuracy for the subsequent camera calibration.

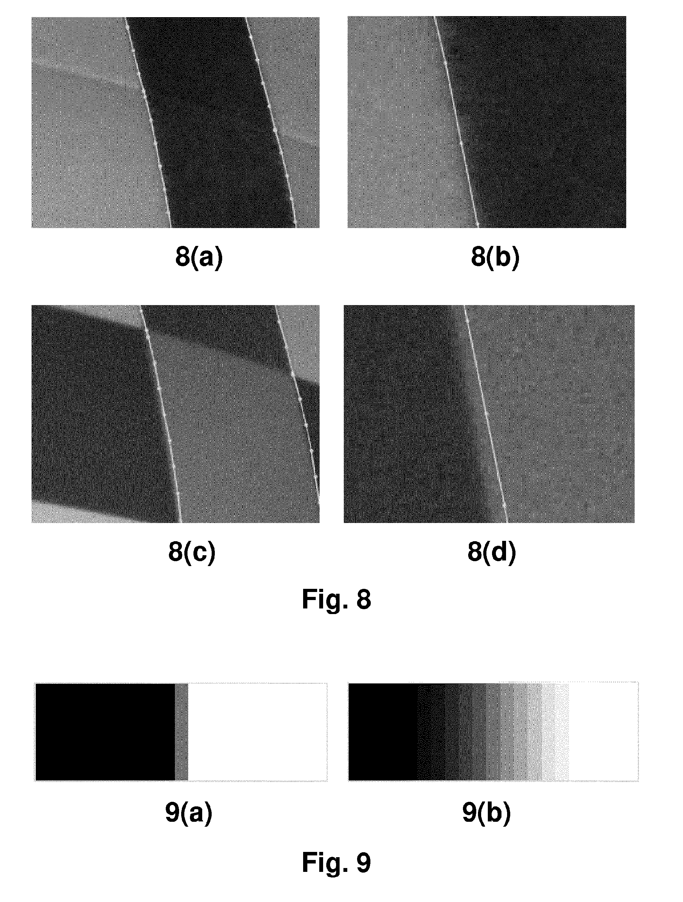

Especially for the above described exemplary embodiments, where the color-coded structure is a color-coded graph including two bundles of parallel stripes, it is noticed that the line bundles extracted from the color channels are affected by a small displacement with respect to their position in the corresponding grayscale images, as shown in Fig. 8. Figs. 8(a)-(b) show the detection result of a vertical edge performed on a blue channel, while Figs. 8(c)-(d) is the detected edge location overlaid on the grayscale image. It can be seen that there are noticeable displacement and difference between the detection results in the two images.

In order to clarify which edge detection is more reliable, the localization accuracy of the edge detection is evaluated by using a calibration object equipped with detectable black points uniformly distributed on the grid as control points. With the use of such marked pattern, various color combination of the sets of patterns are analysed and the average normal distances between the detected edges and reference control points is measured as line detection accuracy indicator. Table 1 shows the test results for several color combination, where the grayscale channel carries more accurate edge localization and the Blue/Green patch is the most mislocalized one.

Table 1

|  | Blue/Green | White/Red | Blue/White | Green/Red |
|---|---|---|---|---|
| Grayscale | 1,89 px | 0,54 px | 0,70 px | 0,69 px |
| Color Channels | 4,43 px | 0,68 px | 1,15 px | 1,22 px |

Therefore, for the above described exemplary embodiments, the refinement of the detected calibration datasets, i.e. selected edge points on the detected lines of the parallel stripes, is preferably performed by using the corresponding grayscale images and especially based on a revised formulation of the Inverse Compositional Algorithm (ICA) [X].

ICA is originally aimed at the image alignment for image stitching and feature tracking, e.g., the estimation of the projective transformation aligning two distinct images of the same scene. In mathematical formalism, ICA provides a solution for the following minimization problem:

$$\bar{p} = \operatorname*{argmin}_{p \in R^N} \left\{ \sum_{m \in \Omega} |T(m) - I(W(m; p))|^2 \right\}$$

where $m = (x, y)$ denotes the image coordinate points, $T(m)$ and $I(m)$ are the two images to be aligned, $\Omega \in R^2$ is the subset of image pixels contributing to the computation of the photometric error and $W(m; p)$ is a 2D projective transformations parameterized by the vector $p \in R^N$. Details for an iterative minimization context of the above formula is described in [X] and is omitted here for clarity.

In this preferred embodiment, to apply the above ICA formula on the refinement of the detected calibration datasets, the template $T(m)$ is defined as a 2D smooth step function, which is assumed to be a good approximation of the visual appearance of an image edge:

$$T(x,y) = \begin{cases} 0 & , \ x < -\delta \\ \dfrac{1+\sin\left(\frac{x\pi}{2\delta}\right)}{2}, & -\delta < x < \delta \\ 1 & , \quad x > \delta \end{cases} \qquad (1)$$

where $\delta$ is the parameter controlling the step slop. In the implementation of this embodiment, a $3\times15$ template with $\delta$ equals to 5 pixels is used. Fig. 9 shows two exemplary templates, where in Fig. 9(a), $\delta$ = 0 (pixels), and in Fig. 9(b), $\delta$ = 5 (pixels).

It is assumed that an image line can be locally approximated as a straight segment, irrespective to how severe the distortion introduced by the camera lens is. This allows for the reduction of image warp complexity to a subspace of 2D rigid motion:

$$p = \begin{bmatrix} \delta x & \delta\theta \end{bmatrix}$$

$$W(m;p) = R(\delta\theta) \cdot \begin{bmatrix} x \\ y \end{bmatrix} + \begin{bmatrix} \delta x \\ 0 \end{bmatrix} \qquad (2)$$

where $R(\delta\theta)$ is a 2D rotation of an angle $\delta\theta$. The Jacobian of the warp function (2) can be easily computed and plugged together with the equation (1) into the ICA optimization framework, in order to estimate the parameter vector $p$ providing the best alignment between the virtual edge template and the local image patch.

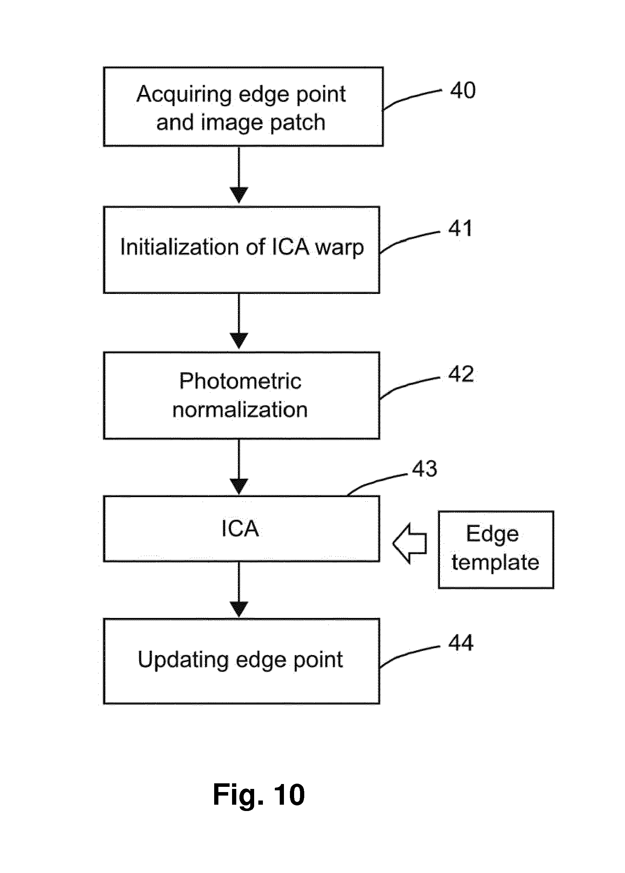

Fig. 10 shows the detailed steps of the refinement process in this embodiment. The refinement process is preferably performed for each edge points detected from the above described determination steps in the previous embodiments of the proposed method.

For each of the selected and acquired 40 edge points, which subsequently extracted as the calibration dataset, a patch on the original image is defined according to the initialized edge location and direction vector. The initialization 41 of the geometric transformation is performed in order to relate the image patch to the virtual template. When the position of an edge point and the local edge direction are denoted as $(m_i, v_i)$, the initial alignment warp of the image patch is given by the 2D rigid motion that brings $m_i$ onto the origin and rotates $v_i$ parallel to the x-axis. Notice that the local edge direction is assumed to be detected from the color channels processing.

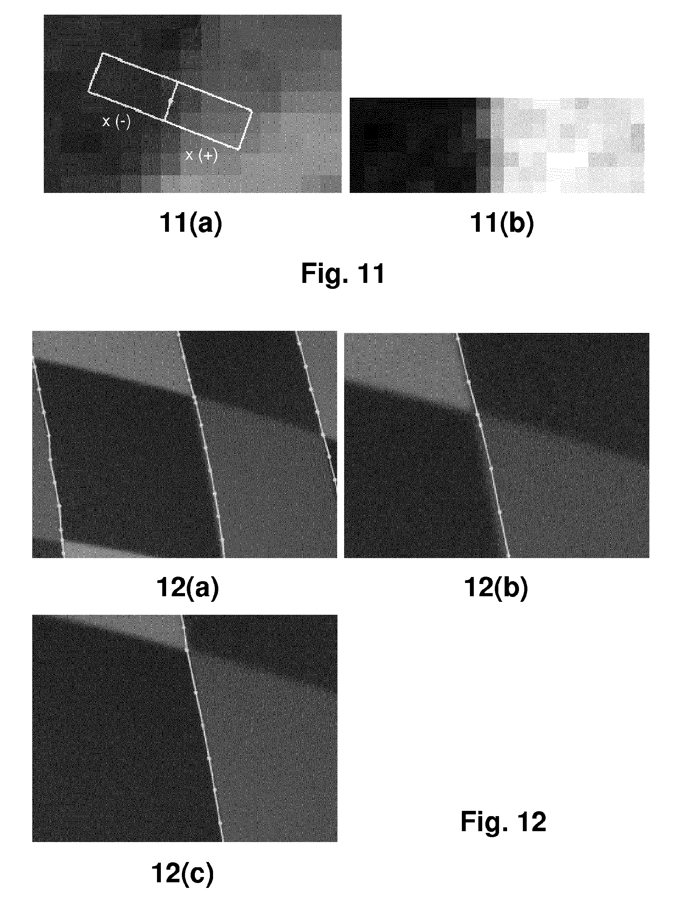

The initialized geometric transformation is used to split the image patch into two regions corresponding to the x-positive and x-negative regions of the template, as shown in Fig. 11(a). The photometric normalization 42 of the image patch is then obtained by the linear transformation converting the median grayscale values of the two image regions to 0 and 1 respectively. Fig. 11(b) shows the same image patch of Fig. 11(a) after photometric normalization and is warped onto the reference frame of the virtual template. In other words, the geometric and photometric warp shown in Fig. 11(b) represents the knowledge of the edge localization inferred from the first edge detection.

Subsequently, the image patch is further defined by means of ICA 43, which directly estimates the warp in the form of equation (2), minimizing the photometric distance between the nominal template and the warped patch. The refined edge points are then updated 44 by applying the estimated warp to the central point of the nominal template, and therefore computing the corresponding points on the image plane.

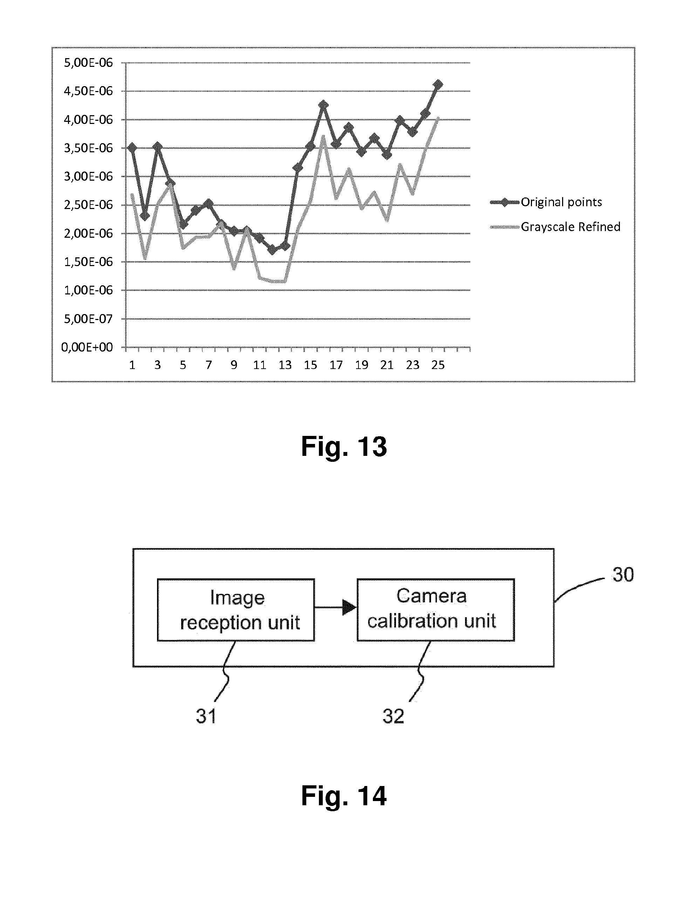

Figs. 12 and 13 show exemplary results of the refinement of the determination of coordinate points associated with the color-coded structure. The calibration dataset is acquired from 26 photos of the color-coded structure taken by a GoPro Hero 3 camera under different orientation. The line bundles of the color-coded structure embedded in each image are detected using the method proposed above and are refined by the above described refinement process. Figs. 12(a)-(b) are the edge line detection results without the refinement process, while Fig. 12(c) shows the more accurate edge detection after the refinement process.

The improvement of the detection of the calibration dataset and the subsequent calibration process is further measured and is as shown in Fig. 13. The camera model parameters are respectively estimated using the original calibration dataset extracted from the color channels and the refined calibration dataset from the grayscale image. The back-projection error associated to the calibration grid is computed for each calibration images. The reduction of the average back-projection error in each view shows that the exploitation of a refined calibration dataset leads to a noticeable increase of the calibration accuracy.

An apparatus 30 configured to perform the camera calibration method according to the present invention is schematically depicted in Fig. 14. The apparatus 30 comprises an image reception unit 31 and a camera calibration unit 32. The image reception unit 31 is configured to receive 10 from a camera an image, in which a color-coded structure is captured. The color-coded structure includes at least two sets of patterns with different color channels. The camera calibration unit 32 is configured to determine 11 a plurality of coordinate points associated with the color-coded structure in the image and to perform 12 camera calibration using the coordinate points. Optionally, the camera calibration unit 32 is also configured to distinguish 13 the at least two sets of patterns of the color-coded structure and to determine 11 respectively a subset of coordinate points for each set of patterns of the color-coded structure. Moreover, the camera calibration unit 32 is preferably configured to refine 14 the determination of the plurality of coordinate points associated with the color-coded structure.

**REFERENCES**

[I] Joaquim Salvi, Xavier Armangué, Joan Batlle, A comparative review of camera calibrating methods with accuracy evaluation, Pattern Recognition, Volume 35, Issue 7, July 2002, Pages 1617-1635.

[II] Devernay and Olivier Faugeras. 2001. Straight lines have to be straight: automatic calibration and removal of distortion from scenes of structured enviroments. Mach. Vision Appl. 13, 1 (August 2001), 14-24

[III] R. Swaminathan and S. K. Nayar. Non-Metric Calibration of Wide-Angle Lenses and Polycameras. IEEE Transactions on Pattern Analysis and Machine Intelligence. 2000. 22: 1172-1178.

[IV] Kenichi Kanatani: Calibration of Ultrawide Fisheye Lens Cameras by Eigenvalue Minimization. IEEE Trans. Pattern Anal. Mach. Intell. 35(4): 813-822 (2013)

[V] G. Jacovitti, A. Neri, Multiresolution circular harmonic decomposition. IEEE Transactions on Signal Processing. 12/2000.

[VI] M. GOFFREDO, S. CONFORTO, M. SCHMID, A. NERI, T. D'ALESSIO, "Markerless evaluation of sit-to-stand strategy in Gauss-Laguerre domain", XVI Congress of the International Society of Electrophysiology and Kinesiology (ISEK2006), Torino, Italy, 2006

[VII] M. Carli, F. Coppola, A. Neri "Translation, Orientation and Scale Estimation Based on Laguerre-Gauss Circular Harmonic Pyramids", in Image Processing: Algorithms and Systems, Proc. SPIE Vol. 4667, Electronic Imaging 2002, 20-25 January 2002, San Jose, California USA

[VIII] L. SORGI N. CIMMINIELLO, NERI A. (2006). Keypoints Selection in the Gauss Laguerre Transformed Domain. In: BMVC06 Proceedings. Edinburgh, September 4-7 2006, BMVC 2006, vol. II, p. 539-548

[IX] L. Sorgi, Edgelet tracking using Gauss-Laguerre Circular Harmonic filters, 18th IEEE International Conference Image Processing (ICIP), 2011: 2897-2900

[X] V. S. Baker and I. Mattheus, Lucas-Kanade 20 Years On: A Unifying Framework, International Journal of Computer Vision 56(3), 221-255, 2004

[XI] M. Goffredo, M. Schmid, S. Conforto, M. Carli, A. Neri and T. D'Alessio, "Markerless Human Motion Analysis in Gauss-Laguerre Transform Domain: An Application to Sit-To-Stand in Young and Elderly People", IEEE Transactions on Information Technology in Biomedicine, 2009 Mar; 13(2):207-216

**Claims**

**1.** A camera calibration method, comprising:

- receiving (10) from a camera an image, in which a structure is captured;

- determining (11) a plurality of coordinate points associated with the structure in the image; and
- performing (12) camera calibration using the coordinate points;

**characterized in that**:

the captured structure is a color-coded structure including at least two sets of patterns in different color channels.

2. The method according to claim 1, further comprising:

- distinguishing (13) the at least two sets of patterns of the color-coded structure; and
- determining (11) respectively a subset of coordinate points for each set of patterns of the color-coded structure.

3. The method according to claim 1, wherein the color-coded structure includes two sets of patterns in different color channels, each of the two sets of patterns being respectively a bundle of parallel stripes.

4. The method according to claim 3, wherein the two bundles of parallel stripes are orthogonal.

5. The method according to claim 3, further comprising:

- distinguishing (13) the two sets of patterns of the color-coded structure; and
- determining (11) respectively a subset of coordinate points for each set of patterns of the color-coded structure.

6. The method according to claim 5, wherein, for each set of patterns, the subset of coordinate points is positioned along the sides of the bundle of parallel stripes.

7. The method according to any one of the preceding claims, further comprising: receiving (10) from the camera a plurality of images, and determining (11) a plurality of coordinate points for each of the images.

8. The method according to any one of the preceding claims, further comprising: refining (14) the determination of the plurality of coordinate points associated with the color-coded structure.

9. The method according to any one of the preceding claims, wherein the color-coded structure is a color-coded graph.

10. A camera calibration apparatus, comprising:

- an image reception unit (31) configured to receive from a camera an image, in which a structure is captured; and
- a camera calibration unit (32) configured to determine a plurality of coordinate points associated with the structure in the image and to perform camera calibration using the coordinate points;

**characterized in that**:

the captured structure is a color-coded structure including at least two sets of patterns in different color channels.

11. The apparatus according to claim 10, wherein the camera calibration unit (32) is configured to distinguish the at least two sets of patterns of the color-coded structure and to determine respectively a subset of coordinate points for each set of patterns of the color-coded structure.

12. The apparatus according to claim 10 or 11, wherein the camera calibration unit (32) is configured to refine the determination of the plurality of coordinate points associated with the color-coded structure.

13. A computer readable storage medium having stored therein instructions for camera calibration, which when executed by a computer, cause the computer to:

- receive from a camera an image, in which a structure is captured;
- determine a plurality of coordinate points associated with the structure in the image; and
- perform camera calibration using the coordinate points;

**characterized in that**:

the captured structure is a color-coded structure including at least two sets of patterns in different color channels.

Receiving an image in
which a color-coded
structure is captured — 10

↓

Determining coordinate
points — 11

↓

Peforming camera
calibration — 12

## Fig. 1

Receiving an image in
which a color-coded
structure is captured — 10

↓

Distinguishing the sets of
patterns of the structure — 13

↓

Determining coordinate
points — 11

↓

Performing camera
calibration — 12

## Fig. 2

**3(a)**  **3(b)**  **3(c)**

**Fig. 3**

**Fig. 4**

5(a)

5(b)

5(c)

5(d)

Fig. 5

6(a)

6(b)          Fig. 6

Receiving an image in
which a color-coded
structure is captured ───── 10

Distinguishing the sets of
patterns of the structure ───── 13

Determining coordinate
points ───── 11

Refininig the
determination of
coordinate points ───── 14

Performing camera
calibration ───── 12

**Fig. 7**

8(a)

8(b)

8(c)

8(d)

Fig. 8

9(a)

9(b)

Fig. 9

Fig. 10

11(a)

11(b)

Fig. 11

12(a)

12(b)

12(c)

Fig. 12

Fig. 13

Fig. 14

Europäisches
Patentamt

European
Patent Office

Office européen
des brevets

# EUROPEAN SEARCH REPORT

Application Number

EP 15 15 0966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | KENICHI KANATANI: "Calibration of Ultrawide Fisheye Lens Cameras by Eigenvalue Minimization", IEEE TRANSACTIONS ON PATTERN ANALYSIS AND MACHINE INTELLIGENCE, IEEE COMPUTER SOCIETY, USA, vol. 35, no. 4, 1 April 2013 (2013-04-01), pages 813-822, XP011494055, ISSN: 0162-8828, DOI: 10.1109/TPAMI.2012.146 * abstract * * page 813, left-hand column, line 11 - page 814, left-hand column, line 7 * * page 818, left-hand column, last paragraph - right-hand column, line 25 * * figures 5,6,8 * ----- | 1-13 | INV. G06T5/00 G06T7/00 H04N1/64 |
| A,D | LORENZO SORGI: "Edgelet tracking using Gauss-Laguerre Circular Harmonic filters", IMAGE PROCESSING (ICIP), 2011 18TH IEEE INTERNATIONAL CONFERENCE ON, IEEE, 11 September 2011 (2011-09-11), pages 2897-2900, XP032080270, DOI: 10.1109/ICIP.2011.6116264 ISBN: 978-1-4577-1304-0 * abstract * * page 2897, left-hand column, line 1 - right-hand column, line 17 * ----- -/-- | 1-13 | TECHNICAL FIELDS SEARCHED (IPC) G06T H04N |

The present search report has been drawn up for all claims

| Place of search | Date of completion of the search | Examiner |
|---|---|---|
| Munich | 1 July 2015 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RICOLFE-VIALA C ET AL: "Correcting non-linear lens distortion in cameras without using a model", OPTICS AND LASER TECHNOLOGY, ELSEVIER SCIENCE PUBLISHERS BV., AMSTERDAM, NL, vol. 42, no. 4, 1 June 2010 (2010-06-01), pages 628-639, XP026827993, ISSN: 0030-3992 [retrieved on 2009-11-27] * abstract * * page 628, right-hand column, last paragraph - page 629, right-hand column, line 29 * | 1-13 | |

TECHNICAL FIELDS
SEARCHED      (IPC)

The present search report has been drawn up for all claims

| Place of search | Date of completion of the search | Examiner |
|---|---|---|
| Munich | 1 July 2015 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 916 288 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **JOAQUIM SALVI ; XAVIER ARMANGUÉ ; JOAN BATLLE.** A comparative review of camera calibrating methods with accuracy evaluation. *Pattern Recognition,* July 2002, vol. 35 (7), 1617-1635
- **DEVERNAY ; OLIVIER FAUGERAS.** Straight lines have to be straight: automatic calibration and removal of distortion from scenes of structured enviroments. *Mach. Vision Appl.,* August 2001, vol. 13 (1), 14-24
- **R. SWAMINATHAN ; S. K. NAYAR.** Non-Metric Calibration of Wide-Angle Lenses and Polycameras. *IEEE Transactions on Pattern Analysis and Machine Intelligence,* 2000, vol. 22, 1172-1178
- **KENICHI KANATANI.** Calibration of Ultrawide Fisheye Lens Cameras by Eigenvalue Minimization. *IEEE Trans. Pattern Anal. Mach. Intell.,* 2013, vol. 35 (4), 813-822
- **G. JACOVITTI ; A. NERI.** Multiresolution circular harmonic decomposition. *IEEE Transactions on Signal Processing,* December 2000
- **M. GOFFREDO ; S. CONFORTO ; M. SCHMID ; A. NERI ; T. D'ALESSIO.** Markerless evaluation of sit-to-stand strategy in Gauss-Laguerre domain. *XVI Congress of the International Society of Electrophysiology and Kinesiology (ISEK2006), Torino, Italy,* 2006
- **M. CARLI ; F. COPPOLA ; A. NERI.** Translation, Orientation and Scale Estimation Based on Laguerre-Gauss Circular Harmonic Pyramids. *Image Processing: Algorithms and Systems, Proc. SPIE Vol. 4667, Electronic Imaging 2002,* 20 January 2002, vol. 4667
- Keypoints Selection in the Gauss Laguerre Transformed Domain. **L. SORGI ; N. CIMMINIELLO ; NERI A.** BMVC06 Proceedings. Edinburgh. BMVC, 04 September 2006, vol. II, 539-548
- **L. SORGI.** Edgelet tracking using Gauss-Laguerre Circular Harmonic filters. *18th IEEE International Conference Image Processing (ICIP),* 2011, 2897-2900
- **V. S. BAKER ; I. MATTHEUS ; LUCAS-KANADE.** 20 Years On: A Unifying Framework. *International Journal of Computer Vision,* 2004, vol. 56 (3), 221-255
- **M. GOFFREDO ; M. SCHMID ; S. CONFORTO ; M. CARLI ; A. NERI ; T. D'ALESSIO.** Markerless Human Motion Analysis in Gauss-Laguerre Transform Domain: An Application to Sit-To-Stand in Young and Elderly People. *IEEE Transactions on Information Technology in Biomedicine,* March 2009, vol. 13 (2), 207-216